# EUROPÄISCHE PATENTSCHRIFT

(11) **EP 0 524 656 B1**
(45) Veröffentlichungstag und Bekanntmachung des Hinweises auf die Patenterteilung: **02.01.1997**
(21) Anmeldenummer: 92112804.7
(22) Anmeldetag: 27.07.1992
(51) Int. Cl.: B60H 1/00

(54) **Vorrichtung zum wahlweisen Beheizen und Kühlen von Fahrzeugräumen**
Device for optionally heating and cooling passenger compartments of vehicles
Dispositif aux choix de chauffage et de refroidissement de l'intérieur d'un véhicule

(30) Priorität: 26.07.1991 DE 4124888; 26.07.1991 DE 4124889
(43) Veröffentlichungstag der Anmeldung: 27.01.1993
(73) Patentinhaber: Eberspächer, J., 73730 Esslingen (DE)
(72) Erfinder: Schmalenbach, Dietrich, W-7348 Gruibingen (DE)
(74) Vertreter: Klunker . Schmitt-Nilson . Hirsch

(56) Entgegenhaltungen:
- EP-A- 0 226 873
- DE-A- 2 044 958
- DE-U- 8 713 443
- US-A- 3 990 505

## Beschreibung

Die Erfindung liegt auf dem Gebiet des wahlweisen Beheizens und Kühlens von Kraftfahrzeugräumen.

Es sind Vorrichtungen zum Beheizen von Kraftfahrzeugräumen, z.B. Innenräumen von Personenkraftwagen, bekannt, die als Wärmequelle ein Heizgerät aufweisen, das im Betrieb durch Verbrennung von Brennstoff Wärme erzeugt.

Es sind ferner Vorrichtungen zum Kühlen von Kraftfahrzeugräumen, z.B. Innenräumen von Personenkraftwagen, bekannt, die einen Kühlmittelkreislauf mit einem der Umgebung Wärme entziehenden Verdampfer, einem Kompressor und einem Wärme an die Umgebung abgebenden Kondensator aufweisen.

Wenn in ein Kraftfahrzeug sowohl eine derartige Heizvorrichtung als auch eine derartige Kühlvorrichtung eingebaut sind, kann der Benutzer den Kraftfahrzeuginnenraum wahlweise beheizen oder kühlen. Der bauliche Aufwand für ein derartiges Ausrüsten eines Kraftfahrzeugs ist jedoch recht hoch. Außerdem ist der Platzbedarf im Kraftfahrzeug recht groß, was insbesondere bei dem Kühlmittelverdampfer der Kühlvorrichtung störend ist, der voluminös ist und in den Luftzuführungsschacht zum Fahrzeuginnenraum eingebaut werden muß.

Der Erfindung liegt die Aufgabe zugrunde, eine Vorrichtung zum wahlweisen Beheizen und Kühlen von Kraftfahrzeugräumen zu schaffen, die weniger bauaufwendig und platzaufwendig ist als das Vorsehen von zwei eigenständigen Vorrichtungen der bekannten, beschriebenen Art.

Gegenstand der Erfindung ist eine Vorrichtung zum wahlweisen Beheizen und Kühlen von Kraftfahrzeugräumen, mit einem Flüssigkeitskreislauf in den folgende Bestandteile eingebaut sind:
(a) ein Heizgerät das im Betrieb durch Verbrennung von Brennstoff Wärme erzeugt und an die Flüssigkeit abgibt;
(b) ein Kühler, der einen Kühlmittelverdampfer enthält und im Betrieb der Flüssigkeit Wärme entzieht;
(c) wobei das Heizgerät und der Kühler in zwei Parallelzweigen des Flüssigkeitskreislaufs angeordnet sind und mindestens ein erstes Ventil vorgesehen ist, das durch seine Stellung bestimmt, durch welchen der beiden Parallelzweige die Flüssigkeit strömt;
(d) mindestens ein Flüssigkeit/Luft-Wärmetauscher zur wahlweisen Abgabe von Heizluft und Kühlluft in den Kraftfahrzeugraum; und
(e) eine Umwälzpumpe,
**dadurch gekennzeichnet**
(f) daß der genannte Flüssigkeitskreislauf und der Kühlflüssigkeitskreislauf einer Brennkraftmaschine für den Antrieb des Kraftfahrzeuges einen kombinierten Flüssigkeitskreislauf mit gemeinsamer Zirkulationsflüssigkeit bilden; und daß bei dem kombinierten Flüssigkeitskreislauf vorgesehen sind:
(g) zwischen dem Flüssigkeit/Luft-Wärmetauscher und der Brennkraftmaschine, in Strömungsrichtung hinter dem Flüssigkeit/Luft-Wärmetauscher, eine erste Verzweigungsstelle;
(h) zwischen der Brennkraftmaschine und dem Flüssigkeit/Luft-Wärmetauscher, in Strömungsrichtung hinter der Brennkraftmaschine, eine zweite Verzweigungsstelle;
(i) wobei von der ersten Verzweigungsstelle zu der zweiten Verzweigungsstelle ein Kreislaufteil führt, der das Heizgerät und den Kühler enthält;
(k) und wobei mindestens ein zweites Ventil vorgesehen ist, das durch seine Stellung bestimmt, ob der genannte Kreislaufteil durchströmt wird;
(l) zwischen der Brennkraftmaschine und der zweiten Verzweigungsstelle, in Strömungsrichtung hinter der Brennkraftmaschine, eine dritte Verzweigungsstelle; und
(m) zwischen der dritten Verzweigungsstelle und dem genannten Kreislaufteil ein Verbindungs-Kreislaufteil, das in Strömungsrichtung hinter der ersten Verzweigungsstelle einmündet.

Eine Vorrichtung gemäß dem Oberbegriff des Anspruchs 1, d. h. mit den Merkmalen (a) bis (e), ist aus dem Dokument EP-A-0 226 873 bekannt. Bei dieser bekannten Vorrichtung steht der im Oberbegriff des Anspruchs 1 angesprochene Flüssigkeitskreislauf über einen Wärmetauscher mit dem Kühlflüssigkeitskreislauf einer Brennkraftmaschine für den Antrieb des Kraftfahrzeugs in Verbindung.

Aus dem Dokument DE-U-87 13 443 ist eine Vorrichtung bekannt, mit der sich ein Kraftfahrzeugraum sowohl beheizen als auch kühlen läßt. Der Flüssigkeit/Luft-Wärmetauscher (10) zur wahlweisen Abgabe von Heizluft und Kühlluft in den Kraftfahrzeugraum und der Kühler (9), dem der Kühlmittelverdampfer zugeordnet ist, sind unmittelbar in den Kühlflüssigkeitskreislauf der Brennkraftmaschine (1) eingebaut. Ein Heizgerät, das im Betrieb durch Verbrennung von Brennstoff Wärme erzeugt und an die Flüssigkeit abgibt, weist diese bekannte Vorrichtung nicht auf, so daß das Beheizen des Kraftfahrzeugraums nur mit Abwärme der Brennkraftmaschine erfolgen kann. Es ist ein als Bypassleitung (16) an der Brennkraftmaschine vorbeiführender Kreislaufteil vorhanden, der bei entsprechender Stellung von Ventilen (6, 6') am Anfang und am Ende der Bypassleitung und bei entsprechender Stellung von dem Kühler (9) zugeordneten Ventilen (8, 8') einen Kühlbetrieb für den Kraftfahrzeugraum ermöglicht. Der aus dem Dokument DE-U-87 13 443 bekannte Aufbau des Flüssigkeitskreislaufs unterscheidet sich von einem Flüssigkeitskreislauf mit den Merkmalen (g) bis (k) des Anspruchs 1 des vorliegenden Patents dadurch, daß der zwischen den Verzweigungsstellen bei den genannten Ventilen (6, 6') gebildete Kreislaufteil (16) nicht den Kühler (9) enthält; der Kühler (9) befindet sich an einer anderen Stelle im Flüssigkeitskreislauf und muß durch eigene Ventile (8, 8') in Funktion genommen oder außer Funktion gesetzt werden.

Bei der erfindungsgemäßen Vorrichtung sind die dem Heizen dienenden Elemente und die dem Kühlen dienenden Elemente in einem gemeinsamen Flüssigkeitskreislauf verbunden. Wie bei der Vorrichtung gemäß EP-A-0 226 873 ist statt eines eigenen Verdampfers, welcher der vorbeiströmenden Luft Wärme entzieht, der Flüssigkeit/Luft-Wärmetauscher, wie er herkömmlicherweise als Teil der Fahrzeugheizung vorhanden ist, mit Doppelfunktion wahlweise zur Abgabe von erwärmter Luft oder zur Abgabe von gekühlter Luft in den Fahrzeugraum vorgesehen.

Die erfindungsgemäße Vorrichtung ist zum wahlweisen Beheizen und Kühlen von Kraftfahrzeugräumen jeglicher Art vorgesehen. Als Beispiele seien genannt: Passagierräume von Personenkraftwagen, Passagierräume von Omnibussen, Fahrerkabinen von Lastkraftwagen, Laderäume von Lastkraftwagen, Führerkabinen von Baumaschinen oder Kränen, Wohnmobile, Motorboote, Flugzeugkabinen.

Mit der erfindungsgemäße Vorrichtung kann man die übliche Kraftfahrzeugheizung, die mit der erwärmten Kühlflüssigkeit der Brennkraftmaschine arbeitet, insbesondere den oder die üblichen Flüssigkeit/Luft-Wärmetauscher dieser Kraftfahrzeugheizung und das zugehörige Luftführungs- und Luftverteilsystem für das wahlweise Beheizen mittels eines vom Laufen der Brennkraftmaschine unabhängigen Heizgeräts und Kühlen mittels des genannten Kühlers benutzen.

In den Ansprüchen 2 bis 11 sind weitere Erfindungsmerkmale angegeben, auf die anschließend oder weiter unten im Zusammenhang mit der Beschreibung eines bevorzugten Ausführungsbeispiels noch näher eingegangen wird.

Der in dem Ansprüchen 6 bis 8 angegebene Antrieb des Kompressors mittels eines Elektromotors ergibt die Möglichkeit, den Kühlungsbetrieb der Vorrichtung viel umfassender und feiner regeln zu können, als dies bei herkömmlichen Kraftfahrzeug-Klimaanlagen möglich war.

Man kann den für diesen Elektromotor benötigten Strom beispielsweise einem chemischen Energiespeicher (Batterie) des Fahrzeugs entnehmen oder dem öffentlichen Stromnetz (typisches Beispiel: auf einem Campingplatz abgestellter Wohnwagenanhänger). Auch im Fall eines Kraftfahrzeugs kann der benötigte Strom der vorhandenen Starterbatterie bei entsprechend großer Auslegung der Kapazität der Starterbatterie und der Leistung des Generators ("Lichtmaschine") des Kraftfahrzeugs entnommen werden. In vielen Fällen ist es jedoch vorteilhafter, einen der erfindungsgemäßen Vorrichtung zugeordneten (gesonderten) Generator zu installieren, der von der weiter vorne erwähnten Brennkraftmaschine des Kraftfahrzeugs antreibbar ist. In diesem Fall ist die Starterbatterie des Kraftfahrzeugs nicht durch den Strombedarf des genannten Elektromotors belastet. Der eigene Generator muß nur dann angetrieben werden, wenn die Vorrichtung im Kühlungsbetrieb läuft.

Die Erfindung wird nachfolgend anhand eines bevorzugten, schematisiert zeichnerisch dargestellten Ausführungsbeispiels noch näher erläutert. Die Zeichnungsfigur zeigt ein kombiniertes Beheizungs- und Kühlsystem für einen Kraftfahrzeugraum in Kombination mit einer dem Antrieb des Kraftfahrzeugs dienenden Brennkraftmaschine.

Das gezeichnete System ist am einfachsten verständlich, wenn man von dem in dicken Linien gezeichneten, insoweit herkömmlichen, auch der Beheizung des Kraftfahrzeugraums dienenden Kühlmittelkreislauf der Brennkraftmaschine ausgeht.

Dieser Kühlmittelkreislauf 2 führt von einer Brennkraftmaschine 4 zu einem Flüssigkeit/Luft-Wärmetauscher 6, von dort zu einer Kühlmittel-Umwälzpumpe 8 und von dort zurück in die Brennkraftmaschine 4. Der Wärmetauscher 6 ist in einem Luftschacht des Kraftfahrzeugs angeordnet, der über Verteildüsen in den Innenraum des Kraftfahrzeugs mündet. Dieser Luftschacht führt dem Wärmetauscher 6 von der äußeren Umgebung her angesaugte Luft (Frischluftbetrieb) und/oder aus dem Kraftfahrzeugraum angesaugte Luft (Umluftbetrieb) zu. Der Vollständigkeit halber ist am Kühlflüssigkeitsausgang der Brennkraftmaschine 4 das dort üblicherweise vorhandene Thermostatventil 10 sowie ein Kühlflüssigkeitskreislaufteil von dem Thermostatventil 10 durch einen normalerweise im Frontbereich des Kraftfahrzeugs angeordneten Kühler 12 zurück zu der Umwälzpumpe 8 eingezeichnet, außerdem eine direkte Verbindung von dem Tehrmostatventil zu der Umwälzpumpe 8. Bei kalter Brennkraftmaschine 4 gibt das Thermostatventil 10 einen direkten Kühlflüssigkeitsrückströmweg zu der Umwälzpumpe 8 frei. Bei heißer Brennkraftmaschine 4 wird die Kühlflüssigkeit stattdessen durch den Kühler 12 geleitet.

Mit dünnen Linien ist ein Flüssigkeitskreislauf 20 gezeichnet, mit dem sich ein wahlweises Beheizen und Kühlen des Kraftfahrzeugraums durchführen läßt, und zwar das Beheizen auch dann, wenn die Brennkraftmaschine 4 nicht läuft. Zur Bildung dieses Flüssigkeitskreislaufs zweigt von dem vorstehend beschriebenen Kühlmittelkreislauf 2 an einer ersten Verzweigungsstelle 22 eine Flüssigkeitsleitung 24 ab, die an einer zweiten Verzweigungsstelle 26 wieder in den Kühlmittelkreislauf 2 einmündet. Die erste Verzweigungsstelle 22 liegt zwischen dem Flüssigkeit/Luft-Wärmetauscher 6 und der Brennkraftmaschine 4, und zwar in Flüssigkeitsströmungsrichtung hinter dem Wärmetauscher 6. Die zweite Verzweigungsstelle 26 liegt zwischen der Brennkraftmaschine 4 und dem Wärmetauscher 6, und zwar in Flüssigkeitsströmungsrichtung hinter der Brennkraftmaschine 4. An der ersten Verzweigungsstelle 22 ist ein zweites 3/2-Wegeventil 28 vorgesehen, das durch seine Stellung bestimmt, ob die Flüssigkeit von dem Wärmetauscher 6 zurück zu der Brennkraftmaschine 4 strömt oder durch die Leitung 24 und dann zurück zu dem Wärmetauscher 6.

Die Leitung 24 verzweigt sich an einer fünften Verzweigungsstelle 30 in zwei Parallelzweige 32 und 34. An der fünften Verzweigungsstelle 30 ist ein erstes 3/2-Wegeventil 36 vorgesehen, das durch seine Stellung bestimmt, ob die Flüssigkeit durch den linken Parallelzweig 32 oder den rechten Parallelzweig 34 strömt. In dem linken Parallelzweig 32 ist ein Heizgerät 38 eingebaut, das in Betrieb durch Verbrennung von Brennstoff, z.B. Benzin, Dieselöl oder Gas, Wärme erzeugt. Derartige Heizgeräte, die häufig "motorunabhängige Heizgeräte" oder "Standheizgeräte" genannt werden, sind bekannt und käuflich erhältlich, so daß das Heizgerät 38 hier nicht näher beschrieben werden muß. Es sei lediglich erwähnt, daß das Heizgerät 38 einen integrierten Verbrennungsgas/Flüssigkeit-Wärmetauscher enthält und somit im Betrieb Wärme an die hindurchgeleitete Flüssigkeit abgibt.

In dem rechten Parallelzweig 34 ist ein Kühler 40 eingebaut. In dem Kühler 40 ist in Koaxialbauweise ein Kühlmittelverdampfer 42 eingebaut. Wenn in dem Verdampfer 42 unter Druck stehendes Kühlmittel expandierend verdampft, wird Wärme verbraucht, die der durch den Kühler 40 strömenden Flüssigkeit entzogen wird. Somit kann man den Kühler 40 auch als Wärmetauscher ansehen, in dem der Flüssigkeit Wärme entzogen wird.

Der Verdampfer 42 ist Teil eines Kühlmittelkreislaufs 44, dem außer dem Verdampfer ein Kompressor 46 für gasförmiges Kühlmittel und ein Kondensator 48 zum Kondensieren des verdichteten, gasförmigen Kühlmittels angehören. Der Kondensator 48 ist im Frontbereich des Kraftfahrzeugs angeordnet, so daß er durch den Fahrtwind oder einen Kühlerventilator gekühlt werden kann.

In dem rechten Parallelzweig 34 sitzt außerdem ein Rückschlagventil 50, so daß der rechte Parallelzweig 34 nur in Richtung von dem ersten Ventil 36 durch den Kühler 40 durchströmt werden kann. Außerdem sitzt in der Leitung 24 vor der fünften Verzweigungsstelle 30 eine elektrisch angetriebene Umwälzpumpe 52.

In gestrichelten Linien ist eine Verbindungsleitung 54 eingezeichnet. Die Verbindungsleitung 54 führt von einer dritten Verzweigungsstelle 56 zu einer vierten Verzweigungsstelle 58. Die dritte Verzweigungsstelle 56 befindet sich zwischen der Brennkraftmaschine 4 und der beschriebenen zweiten Verzweigungsstelle 26, und zwar in Flüssigkeitsströmungsrichtung hinter der Brennkraftmaschine 4. Zwischen der dritten Verzweigungsstelle 56 und der zweiten Verzweigungsstelle 26 ist ein Rückschlagventil 60 eingebaut, so daß die Flüssigkeit nur in Richtung von der dritten Verzweigungsstelle 56 zu der zweiten Verzweigungsstelle 26 strömen kann und nicht umgekehrt. Die vierte Verzweigungsstelle 58 befindet sich in der Leitung 24, und zwar zwischen der ersten Verzweigungsstelle 22 und der fünften Verzweigungsstelle 30.

Wenn das erste Ventil 28 in der Stellung "Alle Flüssigkeit in die Leitung 24" steht, ist der Wärmetauscher 6 von der durch die Brennkraftmaschine führenden Flüssigkeitsströmung abgekoppelt. Er erhält wahlweise zu Heizzwecken Flüssigkeit, die durch das Heizgerät 38 erwärmt worden ist, oder zu Kühlzwecken Flüssigkeit, die durch den Kühler 40 gekühlt worden ist, und zwar je nach Stellung des ersten Ventils 36. Wenn Beheizung des Kraftfahrzeugraums gewünscht ist, kann man auch mit einer Zwischenstellung des ersten Ventils 22 arbeiten, so daß der Wärmetauscher 6 von Flüssigkeit durchströmt wird, die teils in der Brennkraftmaschine 4 und teils in dem Heizgerät 38 erwärmt worden ist.

Die Verbindungsleitung 54 tritt in Funktion, wenn, insbesondere bei nicht laufender Brennkraftmaschine 4, das zweite Ventil 28 in der Stellung "Alle Flüssigkeit zu der Brennkraftmaschine 4" steht. Unter der Wirkung der Umwälzpumpe 52 strömt die Flüssigkeit durch die Verbindungsleitung 54 und den hinteren Teil der Leitung 24 durch das Heizgerät 38 und dann zurück in den Kühlmittelkreislauf 2. Es ergibt sich eine Wärmeabgabe von der in dem Heizgerät 38 erwärmten Flüssigkeit am Wärmetauscher 6 und danach eine Wärmeabgabe an die Brennkraftmaschine 4. Typischer Betriebsfall hierfür ist die Beheizung des Fahrzeugraums zugleich mit einer Vorwärmung der Brennkraftmaschine zur Erleichterung des Startens der Brennkraftmaschine 4, also insbesondere Vorbereitung eines Kraftfahrzeugs zum Losfahren nach einer kalten Nacht. Diese Betriebsweise macht in Verbindung mit einem Kühlen der Flüssigkeit in dem Kühler 40 keinen Sinn, so daß das erste Ventil 36 in der Stellung "Alle Flüssigkeit zu dem Heizgerät 38" sein muß.

Es sei erwähnt, daß in Parallelschaltung zu dem beschriebenen Wärmetauscher 6 ein oder mehrere, weitere Flüssigkeit/Luft-Wärmetauscher 6 vorgesehen sein können, beispielsweise ein Wärmetauscher 6 für die linke Personenkraftwagenseite und ein Wärmetauscher 6 für die rechte Personenkraftwagenseite. Üblicherweise ist dem Wärmetauscher 6 ein Ventilator zugeordnet, dessen einstellbare Drehzahl die Intensität der Beheizung und der Kühlung des Kraftfahrzeugraums bestimmt.

Der beschriebene Kompressor 46 des Kühlmittelkreislaufs ist mit einem elektronisch in seiner Drehzahl regelbaren Antriebs-Elektromotor 60 gekoppelt. Der für den Betrieb des Elektromotors 60 erforderliche Strom wird durch einen Generator 62 erzeugt, der an der Brennkraftmaschine 4 sitzt und von dieser antreibbar ist. Als Ausführungsbeispiel ist ein mit der Kurbelwelle der Brennkraftmaschine 4 gekoppelter Keilriementrieb 64 eingezeichnet. Zwischen dem Keilriementrieb 64 und dem Generator 62 befindet sich eine Magnetkupplung 66. Bei gekuppelter Magnetkupplung 66 wird der Generator 62 angetrieben, während der Generator 62 bei entkuppelter Magnetkupplung 66 nicht angetrieben wird.

Eine Regeleinrichtung 68 ist mit einem Kraftfahrzeugraum-Temperaturfühler 70 verbunden und weist einen Sollwertgeber 72 auf. Die Regeleinrichtung 68 ist außerdem mit dem Elektromotor 60 und der Magnetkupplung 66 verbunden. Die Regeleinrichtung 68 dient beim bezeichneten Ausführungsbeispiel der Regelung des Kühlungsbetriebs des Systems; sie kann aber auch derart ausgebildet sein, daß sie zusätzlich die Regelung des Heizungsbetriebs des Systems übernimmt.

Wenn der Temperaturfühler 70 feststellt, daß die Temperatur des Kraftfahrzeugraums über der eingestellten Soll-Temperatur liegt, wird der Elektromotor 60 in Gang gesetzt und die Magnetkupplung 66 eingekuppelt. Je nach Größe des Temperaturunterschieds zwischen Soll-Temepratur und Ist-Temperatur wird der Elektromotor 60 mit höherer oder niedrigerer Drehzahl betrieben.

Kombiniert mit der beschriebenen Art der Regelung ist eine weitere, durch die Regeleinrichtung 68 bewerkstelligte Regelung. An der Luftzuströmseite des Wärmetauschers 6 sitzt ein weiterer Temperaturfühler 74 und an der Luftaustrittsseite des Wärmetauschers 6 ein weiterer Temperaturfühler 76. Wenn der Kühlbedarf besteht, sorgt die Regeleinrichtung 68 unter Beeinflussung der Drehzahl des elektronisch geregelten Elektromotors 60 dafür, daß der Flüssigkeit in dem Kühler 40 so viel Wärme entzogen wird, daß die Luft an der Austrittsseite des Wärmetauschers 6 eine Temperatur hat, die zwischen 0 und 6°C unterhalb der Lufttemperatur an der Eintrittsseite des Wärmetauschers 6 ist. Bei erheblicher Differenz zwischen Soll-Temperatur und Ist-Temperatur im zu kühlenden Kraftfahrzeugraum wird dabei der obere Grenzwert von 6°C angestrebt, um den Kraftfahrzeugraum möglichst rasch herunterzukühlen. Das Nicht-Überschreiten des Grenzwerts von 6°C ist vorteilhaft, um Zuglufterscheinungen bei den Kraftfahrzeuginsassen zu vermeiden.

Das beschriebene Heiz- und Kühlsystem läßt sich auch für Fahrzeuge ohne Antriebs-Brennkraftmaschine 4 vorsehen, beispielsweise Wohnwagenanhänger oder Segelboote; was allerdings über den Anspruch 1 hinausgeht. Diesen Fall kann man sich dadurch vorstellen, daß der links von der gewellten Linie 78 gezeichnete Systemteil nicht vorhanden ist und daß zwischen dem Kreislauf 2 und der Leitung 24 die strichpunktierte Verbindung 80 besteht. Dann hat man ein mit dem Wärmetauscher 6 arbeitendes Heiz- und Kühlsystem vor sich, bei dem dem Wärmetauscher 6 alternativ Flüssigkeit, die im Heizgerät 38 erwärmt worden ist, und Flüssigkeit, die im Kühler 40 gekühlt worden ist, zugeführt werden kann.

Die beiden Ventile 28 und 36 sind baugleich. Die (Kühl-)Flüssigkeit in dem kombinierten Kreislauf 2, 20 ist normalerweise Wasser oder Wasser/Alkohol-Gemisch.

Integriert in die Regeleinrichtung 68 oder gesondert hiervon ist eine Steuerung vorgesehen, die, wenn Kühlbetrieb gewünscht ist, sowohl das erste Ventil 36 in die Stellung "alle Flüssigkeit zu dem Kühler 40" als auch das zweite Ventil 28 in die Stellung "alle Flüssigkeit in die Leitung 24" bringt und erst dann, beispielsweise aufgrund von Endlagen-Rückmeldungen, den Antrieb des Elektromotors 60 freigibt.

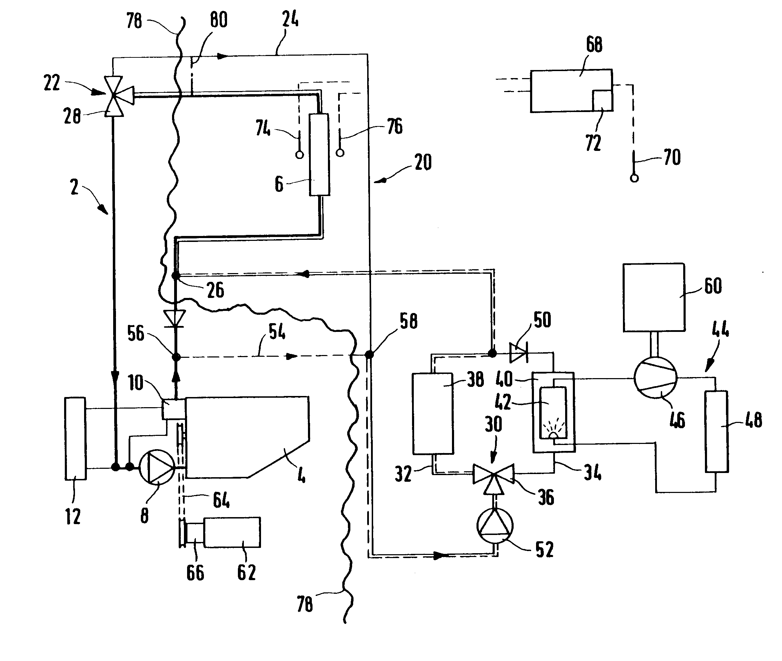

## Patentansprüche

1. Vorrichtung zum wahlweisen Beheizen und Kühlen Von Krafrfahrzeugräumen, mit einem Flüssigkeitskreislauf (20), in den folgende Bestandteile eingebaut sind:
(a) ein Heizgerät (38), das im Betrieb durch Verbrennung von Brennstoff Wärme erzeugt und an die Flüssigkeit abgibt;
(b) ein Kühler (40), der einen Kühlmittelverdampfer (42) enthält und im Betrieb der Flüssigkeit Wärme entzieht;
(c) wobei das Heizgerät (38) und der Kühler (40) in zwei Parallelzweigen (32, 34) des Flüssigkeitskreislaufs (30) angeordnet sind und mindestens ein erstes Ventil (36) vorgesehen ist, das durch seine Stellung bestimmt, durch welchen der beiden Parallelzweige (32, 34) die Flüssigkeit strömt;
(d) mindestens ein Flüssigkeit/Luft-Wärmetauscher (6) zur wahlweisen Abgabe von Heizluft und Kühlluft in den Kraftfahrzeugraum; und
(e) eine Umwälzpumpe (52),
**dadurch gekennzeichnet**
(f) daß der genannte Flüssigkeitskreislauf und der Kühlflüssigkeitskreislauf einer Brennkraftmaschine (4) für den Antrieb des Kraftfahrzeuges einen kombinierten Flüssigkeitskreislauf (20) mit gemeinsamer Zirkulationsflüssigkeit bilden;
und daß bei dem kombinierten Flüssigkeitskreislauf (2, 20) vorgesehen sind:
(g) zwischen dem Flüssigkeit/Luft-Wärmetauscher (6) und der Brennkraftmaschine (4), in Strömungsrichtung hinter dem Flüssigkeit/Luft-Wärmetauscher (6), eine erste Verzweigungsstelle (22);
(h) zwischen der Brennkrafmaschine (4) und dem Flüssigkeit/Luft-Wärmetauscher (6), in Strömungsrichtung hinter der Brennkraftmaschine (4), eine zweite Verzweigungsstelle (26);
(i) wobei von der ersten Verzweigungsstelle (22) zu der zweiten Verzweigungsstelle (26) ein Kreislaufteil (24) führt, der das Heizgerät (38) und den Kühler (40) enthält;
(k) und wobei mindestens ein zweites Ventil (28) vorgesehen ist, das durch seine Stellung bestimmt, ob der genannte Kreislaufteil (24) durchströmt wird;
(l) zwischen der Brennkraftmaschine (4) und der zweiten Verzweigungsstelle (26), in Strömungsrichtung hinter der Brennkraftmaschine (4), eine dritte Verzweigungsstelle (56); und
(m) zwischen der dritten Verzweigungsstelle (56) und dem genannten Kreislaufteil (24) ein Verbindungs-Kreislaufteil (54), das in Strömungsrichtung hinter der ersten Verzweigungsstelle (22) einmündet.

2. Vorrichtung nach Anspruch 1,
**dadurch gekennzeichnet,**
daß das erste Ventil (36) ein 3/2-Wegeventil ist.

3. Vorrichtung nach mindestens einem der Ansprüche 1 bis 2,
**dadurch gekennzeichnet,**
daß das zweite Ventil (28) ein 3/2-Wegeventil ist.

4. Vorrichtung nach mindestens einem der Ansprüche 1 bis 3,
**gekennzeichnet** durch eine Steuerung,
die für den Kühlbetrieb das erste Ventil (36) in die Stellung "Flüssigkeit zum Kühler" und das zweite Ventil (28) in die Stellung "Flüssigkeit zu dem genannten Kreislaufteil" bringt.

5. Vorrichtung nach mindestens einem der Ansprüche 1 bis 4,
**dadurch gekennzeichnet,**
daß der Kühlmittelverdampfer (42) als Koaxialverdampfer in dem Kühler (40) ausgebildet ist.

6. Vorrichtung nach mindestens einem der Ansprüche 1 bis 5,
**dadurch gekennzeichnet,**
daß der in dem Kühler (40) enthaltene Kühlmittelverdampfer (42) in einen Kühlmittelkreislauf (44) eingebunden ist, der einen mittels eines Elektromotors (60) antreibbaren Kompressor (46) zum Verdichten gasförmigen Kühlmittels und einen Kondensator (48) zum Verflüssigen des verdichteten, gasförmigen Kühlmittels enthält.

7. Vorrichtung nach Anspruch 6,
**dadurch gekennzeichnet,**
daß der Elektromotor (60) in seiner Drehzahl regelbar ist.

8. Vorrichtung nach Anspruch 7,
**dadurch gekennzeichnet,**
daß der Elektromotor (60) eletronisch regelbar ist.

9. Vorrichtung nach mindestens einem der Ansprüche 6 bis 8,
**dadurch gekennzeichnet,**
daß für die Stromversorgung des Elektromotors (60) ein Generator (62) vorgesehen ist, der über eine trennbare Kupplung (66), vorzugsweise eine Magnetkupplung, von der Brennkraftmaschine (4) antreibbar ist.

10. Vorrichtung nach mindestens einem der Ansprüche 6 bis 9,
**dadurch gekennzeichnet,**
daß eine Regeleinrichtung (68), ein Sollwertgeber (72) für die Temperatur des Fahrzeugraums und ein Temperaturfühler (70) für den Fahrzeugraum vorgesehen sind, und daß die Regeleinrichtung (68) mit dem Antrieb (60) des Kompressors (46) verbunden ist.

11. Vorrichtung nach Anspruch 10,
**dadurch gekennzeichnet,**
daß ein Temperaturfühler (74) vorgesehen ist, der die Lufttemperatur vor dem Flüssigkeit/Luft-Wärmetauscher (6) erfaßt, und ein Temperaturfühler (76) vorgesehen ist, der die Lufttemperatur hinter dem Flüssigkeit/Luft-Wärmetauscher (6) erfaßt, und daß die Regeleinrichtung (68) so ausglegt ist, daß die Kühlluft beim Durchströmen des Flüssigkeit/Luft-Wärmetauschers (6) um maximal 6°C abgekühlt wird.

## Claims

1. A device for optionally heating and cooling compartments of motor vehicles, having a liquid circuit (20) in which the following components are integrated:
(a) a heating device (38) which, in operation, generates heat by the combustion of fuel, and gives this heat off to the liquid;
(b) a radiator (40) which contains a coolant evaporator (42) and, in operation, draws off heat from the liquid;
(c) the heating device (38) and the radiator (40) being arranged in two parallel branches (32, 34) of the liquid circuit (30), and there being provided at least a first valve (36) which by its position determines through which of the two parallel branches (32, 34) the liquid flows;
(d) at least one liquid/air heat exchanger (6) for optionally giving off heating air and cooling air into the motor vehicle compartment; and
(e) a circulating pump (52),
characterized in that
(f) the above-mentioned liquid circuit and the cooling liquid circuit of an internal combustion engine (4) for driving the motor vehicle form a combined liquid circuit (20) having common circulation liquid;
and in that in the combined liquid circuit (2, 20) there are provided:
(g) between the liquid/air heat exchanger (6) and the internal combustion engine (4), downstream of the liquid/air heat exchanger (6) as seen in the direction of flow, a first branching point (22);
(h) between the internal combustion engine (4) and the liquid/air heat exchanger (6), downstream of the internal combustion engine (4) as seen in the direction of flow, a second branching point (26);
(i) in which arrangement there leads from the first branching point (22) to the second branching point (26) a circuit part (24) which contains the heating device (38) and the radiator (40);
(k) and in which arrangement there is provided at least a second valve (28) which by its position determines whether there is flow through the said circuit part (24);
(l) between the internal combustion engine (4) and the second branching point (26), downstream of the internal combustion engine (4) as seen in the direction of flow, a third branching point (56); and
(m) between the third branching point (56) and the said circuit part (24), a connecting circuit part (54) which joins downstream of the first branching point (22) as seen in the direction of flow.

2. A device according to Claim 1, characterized in that the first valve (36) is a 3/2-way valve.

3. A device according to at least one of Claims 1 to 2, characterized in that the second valve (28) is a 3/2-way valve.

4. A device according to at least one of Claims 1 to 3, characterized by a control which, for the cooling operation, brings the first valve (36) into the "liquid to the radiator" position and the second valve (28) into the "liquid to the said circuit part" position.

5. A device according to at least one of Claims 1 to 4, characterized in that the coolant evaporator (42) is constructed as a coaxial evaporator in the radiator (40).

6. A device according to at least one of Claims 1 to 5, characterized in that the coolant evaporator (42) contained in the radiator (40) is incorporated into a coolant circuit (44) which contains a compressor (46), which may be driven by means of an electric motor (60), for compressing gaseous coolant, and a condenser (48) for liquifying the compressed, gaseous coolant.

7. A device according to Claim 6, characterized in that the speed of the electric motor (60) may be regulated.

8. A device according to Claim 7, characterized in that the electric motor (60) may be regulated electronically.

9. A device according to at least one of Claims 6 to 8, characterized in that there is provided for the power supply to the electric motor (60) a generator (62) which may be driven by way of a separable coupling (66), preferably a magnetic coupling, of the internal combustion engine (4).

10. A device according to at least one of Claims 6 to 9, characterized in that there are provided a regulating device (68), a set-point generator (72) for the temperature of the vehicle compartment and a temperature sensor (70) for the vehicle compartment, and in that the regulating device (68) is connected to the drive (60) of the compressor (46).

11. A device according to Claim 10, characterized in that there is provided a temperature sensor (74) which detects the air temperature upstream of the liquid/air heat exchanger (6), and there is provided a temperature sensor (76) which detects the air temperature downstream of the liquid/air heat exchanger (6), and in that the regulating device (68) is designed such that the cooling air is cooled by a maximum of 6°C when it flows through the liquid/air heat exchanger (6).

## Revendications

1. Dispositif pour chauffer et refroidir au choix des habitacles de véhicules automobiles, comprenant un circuit de liquide (20) dans lequel sont montés les éléments constitutifs suivants :
(a) un appareil de chauffage (38) qui engendre de la chaleur par combustion d'un combustible lors du fonctionnement et qui la fournit au liquide ;
(b) un refroidisseur (40) qui contient un évaporateur d'agent de refroidissement (42) et qui retire de la chaleur au liquide lors du fonctionnement ;
(c) cependant que l'appareil de chauffage (38) et le refroidisseur (40) sont disposés dans deux branches parallèles (32, 34) du circuit de liquide (20), et qu'il est prévu au moins une première valve (36) qui détermine par sa position celle des deux branches parallèles (32, 34) à travers laquelle le liquide s'écoule ;
(d) au moins un échangeur de chaleur liquide-air (6) afin de fournir au choix de l'air chaud et de l'air froid à l'habitacle du véhicule automobile ; et :
(e) une pompe de circulation (52),
caractérisé :
(f) par le fait que ledit circuit de liquide et le circuit de liquide de refroidissement d'un moteur à combustion interne (4) qui est destiné à l'entraînement du véhicule automobile forment un circuit de liquide combiné (20) à liquide de circulation commun ; et par le fait qu'il est prévu pour le circuit de liquide combiné (2, 20) :
(g) un premier point de bifurcation (22) entre l'échangeur de chaleur liquide-air (6) et le moteur à combustion interne (4), après l'échangeur de chaleur liquide-air (6) dans la direction de l'écoulement ;
(h) un deuxième point de bifurcation (26) entre le moteur à combustion interne (4) et l'échangeur de chaleur liquide-air (6), après le moteur à combustion interne (4) dans la direction de l'écoulement ;
(i) cependant qu'une partie de circuit (24) qui contient l'appareil de chauffage (38) et le refroidisseur (40) amène du premier point de bifurcation (22) au deuxième point de bifurcation (26) ;
(k) et cependant qu'il est prévu au moins une deuxième valve (28) qui détermine par sa position si ladite partie de circuit (24) est parcourue ;
(l) un troisième point de bifurcation (56) entre le moteur à combustion interne (4) et le deuxième point de bifurcation (26), après le moteur à combustion interne (4) dans la direction de l'écoulement ; et :
(m) une partie de circuit de liaison (54) qui est située entre le troisième point de bifurcation (56) et ladite partie de circuit (24) et qui débouche après le premier point de bifurcation (22) dans la direction de l'écoulement.

2. Dispositif selon la revendication 1, caractérisé par le fait que la première valve (36) est une valve à trois voies et à deux positions.

3. Dispositif selon l'une au moins des revendications 1 et 2, caractérisé par le fait que la deuxième valve (28) est une valve à trois voies et à deux positions.

4. Dispositif selon l'une au moins des revendications 1 à 3, caractérisé par une commande qui, pour le fonctionnement en refroidissement, amène la première valve (36) dans la position "liquide vers le refroidisseur" et la deuxième valve (28) dans la position "liquide vers ladite partie de circuit".

5. Dispositif selon l'une au moins des revendications 1 à 4, caractérisé par le fait que l'évaporateur d'agent de refroidissement (42) est réalisé sous la forme d'un évaporateur coaxial dans le refroidisseur (40).

6. Dispositif selon l'une au moins des revendications 1 à 5, caractérisé par le fait que l'évaporateur d'agent de refroidissement (42) qui est contenu dans le refroidisseur (40) est intégré à un circuit d'agent de refroidissement (44) contenant un compresseur (46) qui peut être entraîné au moyen d'un moteur électrique (60) en vue de comprimer un agent de refroidissement gazeux et un condenseur (48) pour liquéfier l'agent de refroidissement gazeux comprimé.

7. Dispositif selon la revendication 6, caractérisé par le fait que le moteur électrique (60) peut être régulé quant à sa vitesse de rotation.

8. Dispositif selon la revendication 7, caractérisé par le fait que le moteur électrique (60) peut être régulé par voie électronique.

9. Dispositif selon l'une au moins des revendications 6 à 8, caractérisé par le fait qu'il est prévu pour l'alimentation en courant du moteur électrique (60) un générateur (62) pouvant être entraîné par le moteur à combustion interne (4) par l'intermédiaire d'un accouplement (66) qui peut être débrayé et qui est de préférence un accouplement magnétique.

10. Dispositif selon l'une au moins des revendications 6 à 9, caractérisé par le fait qu'il est prévu un dispositif de régulation (68), un dispositif (72) fixant la valeur de consigne pour la température de l'habitacle du véhicule et un capteur (70) détectant la température de l'habitacle du véhicule, et par le fait que le dispositif de régulation (68) est relié à l'entraînement (60) du compresseur (46).

11. Dispositif selon la revendication 10, caractérisé par le fait qu'il est prévu un capteur de température (74) qui détecte la température de l'air avant l'échangeur de chaleur liquide-air (6) et un capteur de température (76) qui détecte la température de l'air après l'échangeur de chaleur liquide-air (6), et par le fait que le dispositif de régulation (68) est conçu d'une manière telle que l'air de refroidissement soit refroidi de 6°C au maximum lorsqu'il traverse l'échangeur de chaleur liquide-air (6).
